# EUROPEAN PATENT APPLICATION

(11) **EP 3 633 638 A1**
(43) Date of publication of application: **08.04.2020**
(21) Application number: 18810010.1
(22) Date of filing: 26.04.2018
(51) Int. Cl.: G07G 1/12

(54) **INFORMATION PROCESSING DEVICE AND INFORMATION PROCESSING METHOD**

(30) Priority: 29.05.2017 JP 2017105310
(71) Applicant: FeliCa Networks, Inc., Tokyo 141-0032 (JP)
(72) Inventor: TADA, Jun, Tokyo 141-0032 (JP)
(74) Representative: Witte, Weller & Partner Patentanwälte mbB
(86) International application number: PCT/JP2018/016916
(87) International publication number: WO 2018/221097

(57) **Abstract**

More proper provision of electronic receipt information is to be made possible.

There is provided an information processing apparatus including: an acquisition unit that acquires predetermined information provided from an external terminal used in a process of payment; and a control unit that controls provision of electronic receipt information of the payment on the basis of the predetermined information.

## Description

### TECHNICAL FIELD

The present disclosure relates to an information processing apparatus and an information processing method.

### BACKGROUND ART

In recent years, with the advancement of information processing technologies, not only a receipt printed on paper (hereinafter referred to as a "paper receipt" for convenience) but also a receipt in the form of electronic data (hereinafter referred to as "electronic receipt information" for convenience. Note that such receipt is also referred to as an "e-receipt" or a "digital receipt") have become widely available in payment and are used in various ways.

For example, Patent Document 1 below discloses a product sales processing system that can support functions of both a product data input system including self registration and an electronic receipt system.

### CITATION LIST

### PATENT DOCUMENT

Patent Document 1: Japanese Patent Application Laid-Open No. 2016-131019

### SUMMARY OF THE INVENTION

### PROBLEMS TO BE SOLVED BY THE INVENTION

However, depending on the system described in Patent Document 1 and the like, it has been difficult to provide the electronic receipt information properly. For example, the system described in Patent Document 1 is established by a server that controls provision of the electronic receipt information. Therefore, server cost is generated, a time lag occurs between completion of payment and reception of the electronic receipt information, and member registration or the like by a user has been required.

The present disclosure has thus been made in view of the above and provides new and improved information processing apparatus and information processing method that can provide electronic receipt information more properly.

### SOLUTIONS TO PROBLEMS

The present disclosure provides an information processing apparatus including: an acquisition unit that acquires predetermined information provided from an external terminal used in a process of payment; and a control unit that controls provision of electronic receipt information of the payment on the basis of the predetermined information.

The present disclosure further provides an information processing method executed by a computer, the method including: acquiring predetermined information provided from an external terminal used in a process of payment; and controlling provision of electronic receipt information of the payment on the basis of the predetermined information.

The present disclosure further provides an information processing apparatus including a communication unit that performs transmission of flag information indicating necessity of electronic receipt information of payment in a process of the payment.

The present disclosure further provides an information processing method executed by a computer, the method including transmitting flag information indicating necessity of electronic receipt information of payment in a process of the payment.

### EFFECTS OF THE INVENTION

As described above, the electronic receipt information can be provided more properly according to the present disclosure.

Note that the effect is not necessarily limited to the above effect, and any effect illustrated in the present specification or another effect that can be perceived from the present specification may be obtained along with or in place of the above effect.

### BRIEF DESCRIPTION OF DRAWINGS

Fig. 1 is a view illustrating an example of a configuration of an information processing system according to the present embodiment.
Fig. 2 is a block diagram illustrating an example of a functional configuration of a POS terminal.
Fig. 3 is a block diagram illustrating an example of a functional configuration of a reader/writer.
Fig. 4 is a block diagram illustrating an example of a functional configuration of a user terminal.
Fig. 5 is a flowchart illustrating an example of the operation in a case where an on-chip ID and electronic receipt flag information are acquired when an electronic order is made.
Fig. 6 is a flowchart illustrating an example of the operation in a case where an on-chip ID and electronic receipt flag information are acquired when a membership card is presented.
Fig. 7 is a flowchart illustrating an example of the operation in a case where an on-chip ID and electronic receipt flag information are acquired when a loyalty card is presented.
Fig. 8 is a flowchart illustrating an example of the operation in a case where an on-chip ID and electronic receipt flag information are acquired when a payment is made.
Fig. 9 is a flowchart illustrating an example of a first receipt issuing operation.
Fig. 10 is a flowchart illustrating an example of a second receipt issuing operation.
Fig. 11 is a flowchart illustrating an example of an operation for controlling access to electronic receipt information from an external application.
Fig. 12 is a block diagram illustrating an example of a hardware configuration of a POS terminal or a user terminal.

### MODE FOR CARRYING OUT THE INVENTION

Hereinafter, a preferred embodiment of the present disclosure will be described in detail with reference to the drawings. Note that in the present specification and the drawings, components having substantially the same functional configuration will be assigned the same reference numerals, whereby redundant description will be omitted.

Note that the description will be made in the following order.
1. Background of present disclosure
2. Overview of present disclosure
3. Functional configuration of apparatus
4. Operation of apparatus
5. Hardware configuration of apparatus
6. Conclusion

### <1. Background of present disclosure>

As described above, with the advancement of information processing technologies in recent years, electronic receipt information has become widely available and is used in various ways.

Here, various ways exist as a method of delivering the electronic receipt information. For example, there is a way in which a user registers as a member in advance using a predetermined application managed by a service provider so that, in a case where the user purchases a product or uses a service via the application, the electronic receipt information is provided to the application or an e-mail address registered in the application.

There is also a way in which identification information (an ID or the like) of a membership card issued by a service provider is registered in an application or the like provided by the provider and is associated with the application, so that the electronic receipt information is provided to the application associated with the membership card when a user presents the membership card at the time of payment in a store.

There is also a way in which, at a store adopting a point of sales system (POS) that supports electronic receipt information, identification information (an ID or the like) indicated in an electronic receipt information receiving application or the like provided by a POS vendor is read by the POS of the store so that the electronic receipt information is provided to the application when a user makes a payment.

Moreover, there is a way in which identification information (an ID, a barcode, a two-dimensional code, or the like) of a receipt is indicated on a paper receipt issued at the time of payment so that, when a user causes a predetermined application to read the identification information, the electronic receipt information corresponding to the identification information is provided to the application.

The ways described above have caused various problems in some cases. For example, the ways described above are all implemented by a server that controls provision of the electronic receipt information. Therefore, costs are generated for the construction, maintenance, operation, or the like of the server, a network used for connection to the server, or an application or the like run on the server or a user terminal. Furthermore, the electronic receipt information includes personal information of the user so that security measures are also required to prevent information leakage and falsification.

Furthermore, since the electronic receipt information is provided through the server, there occurs a time lag corresponding to the time between completion of a payment and reception of the electronic receipt information by the user. The time lag gets longer in a case where a delay occurs in the network connecting the server and the user terminal.

Furthermore, there is a case where a user needs to register as a member in an application provided by each business operator. More specifically, by registering as a member in an application provided by a certain business operator, a user can receive electronic receipt information in case of purchasing a product or the like from the business operator, but in case of purchasing a product or the like from another business operator, the user cannot receive electronic receipt information unless separately registering as a member in an application provided by the other business operator, which is inconvenient.

Furthermore, an IC card (such as a membership card), an information processing apparatus (such as a smartphone), or the like of a recipient of the electronic receipt information needs to be read before issuance of the electronic receipt information, whereby the user and a store clerk bear a heavy workload.

Furthermore, the format, standard, or storage region of the electronic receipt information varies depending on each business operator or each application so that it is difficult to utilize the electronic receipt information across a plurality of business operators or applications (that is, a secondary use of the electronic receipt information is not executed smoothly). In particular, since the storage region of the electronic receipt information is scattered, only a dedicated application can access the electronic receipt information.

Furthermore, in a case where the electronic receipt information after being received is not stored in a storage area where security is guaranteed, a third party, an external application, a virus program, or the like may perform unauthorized viewing, falsification, duplication, deletion, or the like if an electronic signature or the like is not given, in which case the electronic receipt information may not be able to be used as payment proof information.

Moreover, in a case where the electronic receipt information is provided using identification information or the like indicated on a paper receipt, the paper receipt needs to be issued so that the benefit of digitization is small. Furthermore, if the paper receipt is viewed or stolen by a third party, the electronic receipt information is acquired by the third party (that is, a mismatch occurs between the payer and the recipient of the electronic receipt information).

The person disclosing the present specification has arrived at the technology of the present specification in view of the above circumstances. Hereinafter, the present disclosure will be described in detail in the order of "2. overview of present disclosure", "3. functional configuration of apparatus", "4. operation of apparatus", and "5. hardware configuration of apparatus".

### <2. Overview of present disclosure>

### (2-1. System configuration)

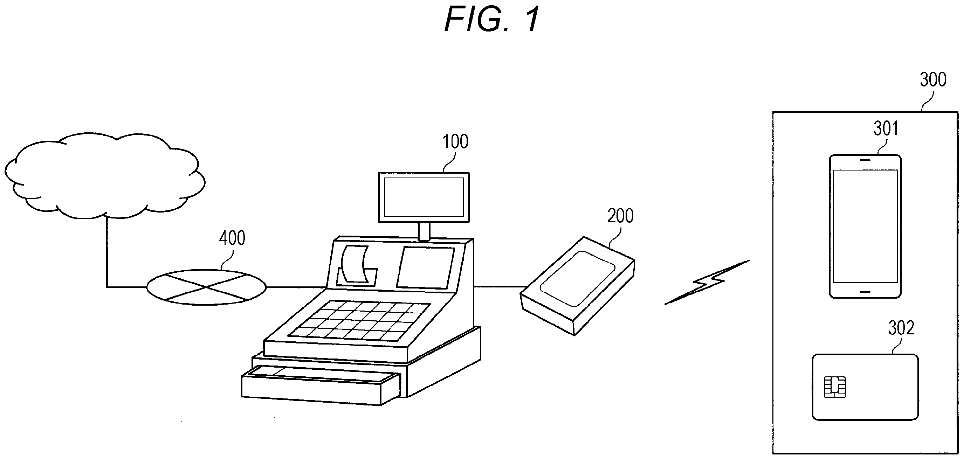

The background of the present disclosure has been described above. Next, a configuration of an information processing system according to an embodiment of the present disclosure will be described with reference to Fig. 1. Fig. 1 is a view illustrating an example of a configuration of an information processing system according to the present embodiment.

As illustrated in Fig. 1, the information processing system according to the present embodiment includes a POS terminal 100, a reader/writer 200, and a user terminal 300.

### (POS terminal 100)

The POS terminal 100 is an information processing apparatus that performs payment processing of a product or service, sales accounting, and the like, where one or a plurality of the information processing apparatuses is installed in a store. For example, with regard to the payment processing of a product or the like, the POS terminal 100 confirms an amount of payment, performs payment processing using cash, a credit card, or the like, provides a receipt (electronic receipt information and/or a paper receipt), and the like.

Note that although the POS terminal 100 is described as an example in the present document, another information processing apparatus may be used as well. For example, instead of the POS terminal 100, an information processing apparatus such as a predetermined server, a personal computer (PC), or a tablet PC may be used.

Furthermore, as illustrated in Fig. 1, the POS terminal 100 is connected to a network 400 and can communicate with an external apparatus via the network 400. For example, the POS terminal 100 can communicate with the POS terminal 100 in the same store or another store, or with a server that has control over a plurality of the POS terminals 100 via the network 400. Note that the type of the network 400 and the communication scheme between the POS terminal 100 and the external apparatus are arbitrary.

### (Reader/writer 200)

The reader/writer 200 is an information processing apparatus that performs contactless communication with the user terminal 300 when a user holds the user terminal 300 over the reader/writer. The reader/writer 200 can also communicate with the POS terminal 100 to be able to provide the user terminal 300 with various information (such as electronic receipt information) provided from the POS terminal 100 and provide the POS terminal 100 with various information (such as identification information) acquired from the user terminal 300.

The contactless communication performed by the reader/writer 200 and the user terminal 300 includes, but is not limited to, Near Field Communication (NFC), Wireless Fidelity (Wi-Fi), or Bluetooth (registered trademark), for example. Note that the reader/writer 200 and the user terminal 300 may perform contact communication instead of the contactless communication. What is particularly effective in the present embodiment is the contactless communication such as NFC, Bluetooth, Wi-Fi, or the like that is successful in a case where the reader/writer 200 and the user terminal 300 are separated by a predetermined distance or less, and contact communication that requires the reader/writer 200 to be in contact with the user terminal 300 (details will be described later).

Furthermore, the communication scheme between the reader/writer 200 and the POS terminal 100 is arbitrary. For example, the communication scheme between the reader/writer 200 and the POS terminal 100 may be any contactless communication or any contact communication (including wired communication).

### (User terminal 300)

The user terminal 300 is an information processing apparatus that is used in the process of payment and communicates with the reader/writer 200. For example, the user terminal 300 can function as a membership card, a loyalty card, or the like. More specifically, the user terminal 300 is held over the reader/writer 200 to provide the reader/writer 200 with information associated with a membership card (such as a member ID, a name, a date of member registration, or a store at which member registration is performed) or information associated with a loyalty card (such as a member ID, the number of points accumulated, or a date of update).

The user terminal 300 can also perform ordering of a product or service (hereinafter referred to as "electronic order processing" for convenience) or payment processing (payment processing made by electronic money, a credit card, or the like). More specifically, the user terminal 300 is held over the reader/writer 200 to provide the reader/writer 200 with information of a product or the like being ordered (such as a product code or the number of items) or information used for payment (such as a balance of electronic money or a credit card number). The above functions are merely examples, and the user terminal 300 may have a function other than the above functions as appropriate. Furthermore, one user terminal 300 may have a plurality of functions.

Any apparatus can be used as the user terminal 300 as long as being an information processing apparatus used in the process of payment. For example, as illustrated in Fig. 1, a smartphone 301 (including a mobile phone), an IC card 302, or the like may be used as the user terminal 300.

### (2-2. Functional overview of present disclosure)

The configuration of the information processing system according to the present embodiment has been described above. Next, a functional overview of the present disclosure will be described.

The present disclosure provides electronic receipt information to the user terminal 300 without going through a server. More specifically, the POS terminal 100 can generate electronic receipt information without going through a server connected by the network 400 and provide the user terminal 300 with the electronic receipt information via the reader/writer 200.

The present disclosure can thus reduce cost for the construction, maintenance, operation, or the like of the server, a network used for connection with the server, or the like. The present disclosure can also cut the time lag between completion of a payment and reception of the electronic receipt information by a user. Furthermore, the present disclosure can provide the electronic receipt information to a user without the user registering as a member.

Furthermore, the POS terminal 100 compares an on-chip ID of the user terminal 300 provided in the process of payment with an on-chip ID of the user terminal 300 used for receiving the electronic receipt information, and provides the electronic receipt information in a case where these IDs are the same. The present disclosure can thus guarantee the identity between the payer and the recipient of the electronic receipt information. Here, various types of identification information can be used as the on-chip ID. Details will be described later.

Furthermore, the present disclosure can more reliably guarantee the identity between the payer and the recipient of the electronic receipt information by the reader/writer 200 and the user terminal 300 performing the contactless communication (NFC, Bluetooth, Wi-Fi, or the like) that is successful in a case where the reader/writer and the user terminal are separated by a predetermined distance or less, or performing the contact communication. More specifically, the recipient of the electronic receipt information is required to be present at a place where payment is made, and a store clerk handling the payment can witness the delivery of the electronic receipt information, so that the present disclosure can more reliably guarantee the identity between the payer and the recipient of the electronic receipt information. Note that the above effect is more noticeable especially in a case where the electronic receipt information is delivered via NFC or the like that can perform communication over an extremely short separation (about several tens of centimeters).

Furthermore, the present disclosure can realize a series of processings (electronic order processing, presentation of a membership card, presentation of a loyalty card and addition of points, payment processing, reception of electronic receipt information, and the like) that occurs with payment by an action of a user holding the user terminal 300 over the reader/writer 200 once. Therefore, the present disclosure can reduce the workload on the user and the store clerk involved in the series of processings.

Furthermore, the user can set flag information associated with reception of the electronic receipt information (hereinafter referred to as "electronic receipt flag information" for convenience) on the user terminal 300. The content of the electronic receipt flag information is arbitrary. For example, the electronic receipt flag information may represent information such as "electronic receipt information is required", "electronic receipt information is not required", or "electronic receipt information is required and is to be received on another user terminal 300". The POS terminal 100 acquires these electronic receipt flag information from the user terminal 300 in the process of payment, thereby determining necessity and a destination of issuance of the electronic receipt information on the basis of the information. This allows the user to receive a receipt by a desired method without telling the store clerk how to receive the receipt. Note that the electronic receipt flag information is not essential.

The user terminal 300 also includes a security chip having tamper resistance, and stores the electronic receipt information received in a secure memory within the security chip. The user terminal 300 can thus prevent unauthorized viewing, falsification, duplication, deletion, or the like by a third party, an external application, a virus program, or the like.

Moreover, the user terminal 300 stores the electronic receipt information being divided into blocks for each item of information included in the electronic receipt information (year of purchase, month of purchase, day of purchase, hour of purchase, minute of purchase, name of chain store, name of branch store, store address, store telephone number, product purchased, product code such as JAN code, number of products purchased, unit price, discount amount, tax, total amount, payment method, receipt number, electronic money balance, points added, and the like). Then, the user terminal 300 can perform access control on these plurality of types of information units included in the electronic receipt information on the basis of a user operation. The user terminal 300 can thus provide information as desired by the user to each application of an external apparatus or its own apparatus (for example, "only purchase information of the year 2017 can be provided", "only purchase information at a specific store can be provided", or the like). Note that the user terminal 300 may perform the above access control on the basis of not the user operation but settings by a predetermined external apparatus or initial settings.

Furthermore, the secure memory in which the electronic receipt information is stored is a storage area used in common by a plurality of applications or services. Moreover, the electronic receipt information is stored while being divided into blocks as described above, and can thus be stored in a unified storage format. As a result, the electronic receipt information can be utilized by applications or services provided by different business operators.

### (2-3. Overview of on-chip ID)

The functional overview of the present disclosure has been described above. Next, an overview of the on-chip ID used to control the provision of the electronic receipt information in the present disclosure will be described. The on-chip ID is not particularly limited as long as it is some identification information that belongs to a user making a payment.

For example, the on-chip ID may be identification information individually assigned on a chip-by-chip basis (a chip-specific ID (for example, an IDm or the like)) by a chip vendor or the like, or identification information individually assigned for a specific area in the chip (identification information of a common area of the chip or the like).

The on-chip ID may also be a predetermined piece of identification information (a user ID, an electronic money ID, credit card information, membership card information, an electronic order ID, predetermined identification information used by an application, or the like) dispensed by a service provider or the like.

Furthermore, in a case where a storage area for storing electronic receipt information is included in the chip of the user terminal 300, the on-chip ID may be identification information individually assigned for each of the storage area. Note that the storage area may be a storage area used in common by a plurality of applications or services, or may be a storage area used by a specific application or service.

### <3. Functional configuration of apparatus>

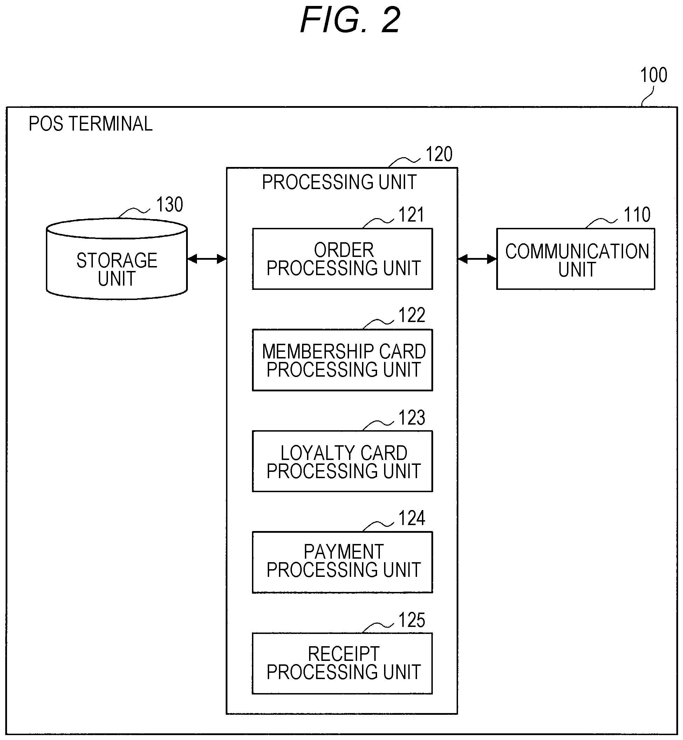

The overview of the on-chip ID has been described above. Next, a functional configuration of each apparatus according to the present embodiment will be described with reference to Figs. 2 to 4.

### (3-1. Functional configuration of POS terminal 100)

Fig. 2 is a functional configuration of the POS terminal 100. As illustrated in Fig. 2, the POS terminal 100 includes a communication unit 110, a processing unit 120, and a storage unit 130. Moreover, the processing unit 120 includes an order processing unit 121, a membership card processing unit 122, a loyalty card processing unit 123, a payment processing unit 124, and a receipt processing unit 125.

### (Communication unit 110)

The communication unit 110 communicates with an external apparatus such as the reader/writer 200. For example, the communication unit 110 communicates various information (electronic order information, membership card information, loyalty card information, electronic payment information, electronic receipt information, and the like) used in a series of processings concerning payment. Particularly, with the provision of the electronic receipt information, the communication unit 110 functions as an acquisition unit for acquiring the on-chip ID or electronic receipt flag information of the user terminal 300 as well as transmits electronic receipt information generated by the receipt processing unit 125 described later and receives a notification of reception of the electronic receipt information. Note that the content of communication described above is merely an example, and the communication unit 110 may communicate other information.

### (Processing unit 120)

The processing unit 120 performs various processings implemented by the POS terminal 100. Hereinafter, each functional configuration included in the processing unit 120 will be described.

### (Order processing unit 121)

The order processing unit 121 performs processing related to various orders including electronic order processing. For example, in a case where a user performs electronic order processing using the user terminal 300 (in a case where a user orders a product or service using a predetermined application or the like), the order processing unit 121 performs various processings that occur with the electronic order processing (order registration, sharing of information with various servers, updating of stock, calculation of a total amount, or the like). Note that the order processing unit 121 may perform processing related to an order made by a store clerk's input (such as an input using a button or a barcode reader). Note that the content of processing described above is merely an example, and the order processing unit 121 may perform other processing.

### (Membership card processing unit 122)

The membership card processing unit 122 performs processing related to a membership card. For example, in a case where a user presents a membership card (or an information processing apparatus such as the smartphone 301 holding membership card information) in the process of payment, the membership card processing unit 122 determines whether or not the user is a member and the like. Note that the content of processing described above is merely an example, and the membership card processing unit 122 may perform other processing.

### (Loyalty card processing unit 123)

The loyalty card processing unit 123 performs processing related to a loyalty card. For example, in a case where a user presents a loyalty card (or an information processing apparatus such as the smartphone 301 holding loyalty card information) in the process of payment, the loyalty card processing unit 123 performs processing of adding points corresponding to the amount of payment or the like. Note that the content of processing described above is merely an example, and the loyalty card processing unit 123 may perform other processing.

### (Payment processing unit 124)

The payment processing unit 124 performs payment processing. For example, the payment processing unit 124 performs processing of acquiring electronic money corresponding to the amount of payment from the electronic money held in the user terminal 300, or performs general credit card payment processing on the basis of credit card information (such as a credit card number) acquired from the user terminal 300. Note that the content of processing described above is merely an example, and the payment processing unit 124 may perform other processing.

### (Receipt processing unit 125)

The receipt processing unit 125 performs processing related to a receipt. In particular, the receipt processing unit 125 functions as a control unit that controls provision of electronic receipt information. For example, the receipt processing unit 125 determines the necessity or destination of the electronic receipt information on the basis of the electronic receipt flag information acquired in the process of payment. In a case where the electronic receipt information needs to be provided, the receipt processing unit 125 compares the on-chip ID acquired in the process of payment with the on-chip ID used for receiving the electronic receipt information, and provides the electronic receipt information in a case where the respective on-chip IDs are the same. Moreover, in a case where the respective on-chip IDs are not the same, the receipt processing unit 125 may provide a paper receipt, or need not provide the electronic receipt information nor the paper receipt. Note that the content of processing described above is merely an example, and the receipt processing unit 125 may perform other processing.

### (Storage unit 130)

The storage unit 130 stores various information. For example, the storage unit 130 stores various information (electronic order information, membership card information, loyalty card information, electronic payment information, on-chip ID of the user terminal 300, electronic receipt information, and the like) used in a series of processings concerning payment. The storage unit 130 also stores various information (product information, customer information, sales record information, and the like) assumed for a general POS. Note that the above content is merely an example, and the storage unit 130 may store other information.

Note that although not shown, the POS terminal 100 includes an output unit such as a display and a lamp, which may be caused to output information associated with the electronic receipt information (content of the electronic receipt information, success or failure of delivery of the electronic receipt information, or the like). As a result, for example, a store clerk can acknowledge the success or failure of delivery of the electronic receipt information, and the like. The store clerk can deliver the electronic receipt information again and the like in the case of failure of the delivery.

### (3-2. Functional configuration of reader/writer 200)

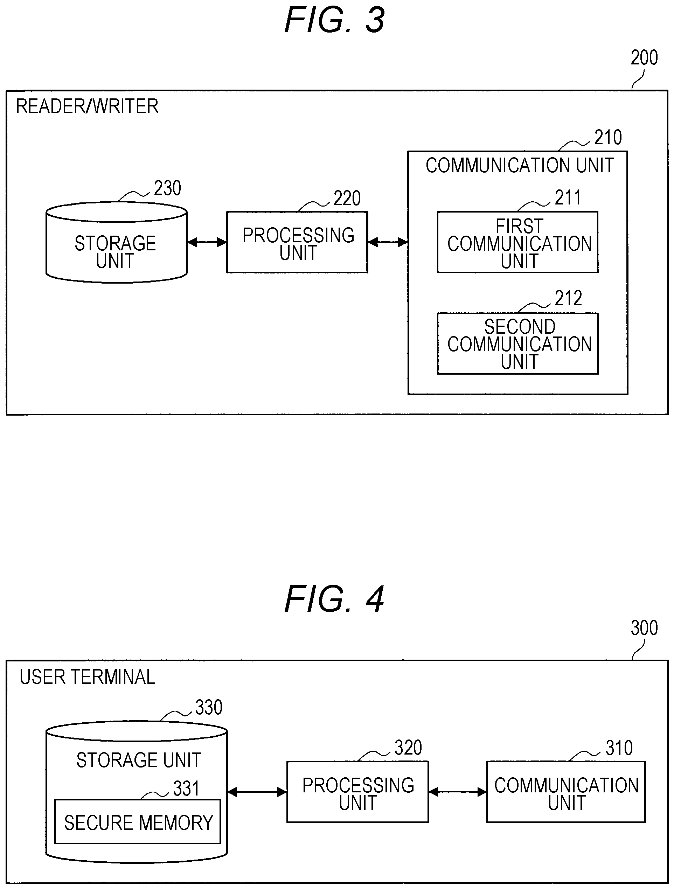

Fig. 3 is a functional configuration of the reader/writer 200. As illustrated in Fig. 3, the reader/writer 200 includes a communication unit 210, a processing unit 220, and a storage unit 230. Moreover, the communication unit 210 includes a first communication unit 211 and a second communication unit 212.

### (Communication unit 210)

The communication unit 210 communicates with an external apparatus such as the POS terminal 100 or the user terminal 300. As described above, the communication unit 210 includes the first communication unit 211 and the second communication unit 212. Each functional configuration will be described below.

### (First communication unit 211)

The first communication unit 211 performs contactless communication (NFC, Bluetooth, Wi-Fi, or the like) with the user terminal 300. More specifically, the first communication unit 211 mediates the communication of various information (electronic order information, membership card information, loyalty card information, electronic payment information, electronic receipt information, and the like) used in a series of processings concerning payment between the POS terminal 100 and the user terminal 300. In particular, with the provision of the electronic receipt information, the first communication unit 211 mediates the communication of the on-chip ID of the user terminal 300, the electronic receipt information, and the notification of reception of the electronic receipt information. Note that the content of communication described above is merely an example, and the first communication unit 211 may communicate other information. Also, as described above, the first communication unit 211 may perform contact communication with the user terminal 300.

### (Second communication unit 212)

The second communication unit 212 communicates with the POS terminal 100. More specifically, as with the first communication unit 211, the second communication unit 212 mediates the communication of various information used in a series of processings concerning payment between the POS terminal 100 and the user terminal 300. Note that the content of communication described above is merely an example, and the second communication unit 212 may communicate other information. Also, as described above, the communication scheme performed by the second communication unit 212 is arbitrary.

### (Processing unit 220)

The processing unit 220 performs various processings implemented by the reader/writer 200. For example, the processing unit 220 controls communication with the POS terminal 100 and the user terminal 300 by controlling the first communication unit 211 and the second communication unit 212.

### (Storage unit 230)

The storage unit 230 stores various information. For example, the storage unit 230 stores a program, a parameter, or the like used by each functional configuration of the reader/writer 200. Note that the above content is merely an example, and the storage unit 230 may store other information. For example, the storage unit 230 may temporarily store various information (electronic order information, membership card information, loyalty card information, electronic payment information, on-chip ID of the user terminal 300, electronic receipt information, notification of reception of the electronic receipt information, and the like) used in a series of processings concerning payment.

### (3-3. Functional configuration of user terminal 300)

Fig. 4 is a functional configuration of the user terminal 300. As illustrated in Fig. 4, the user terminal 300 includes a communication unit 310, a processing unit 320, and a storage unit 330. Moreover, the storage unit 330 includes a secure memory 331.

### (Communication unit 310)

The communication unit 310 communicates with an external apparatus such as the reader/writer 200. For example, the communication unit 310 communicates various information (electronic order information, membership card information, loyalty card information, electronic payment information, electronic receipt information, and the like) used in a series of processings concerning payment. In particular, with the provision of the electronic receipt information, the communication unit 310 transmits the on-chip ID of the user terminal 300, receives the electronic receipt information, and transmits the notification of reception of the electronic receipt information. Note that the content of communication described above is merely an example, and the communication unit 310 may communicate other information.

### (Processing unit 320)

The processing unit 320 performs various processings implemented by the user terminal 300. For example, in a case where contactless communication is performed by a user holding the user terminal 300 over the reader/writer 200, the processing unit 320 controls processing of transmitting the on-chip ID and the electronic receipt flag information to the reader/writer 200. As a result, the POS terminal 100 can grasp the on-chip ID and the electronic receipt flag information through the reader/writer 200, and can control provision of the electronic receipt information on the basis of these pieces of information.

Furthermore, in a case of receiving the electronic receipt information, the processing unit 320 stores the information in the secure memory 331 as described later. The processing unit 320 stores the electronic receipt information that is divided into blocks for each item of information included in the electronic receipt information, as described above.

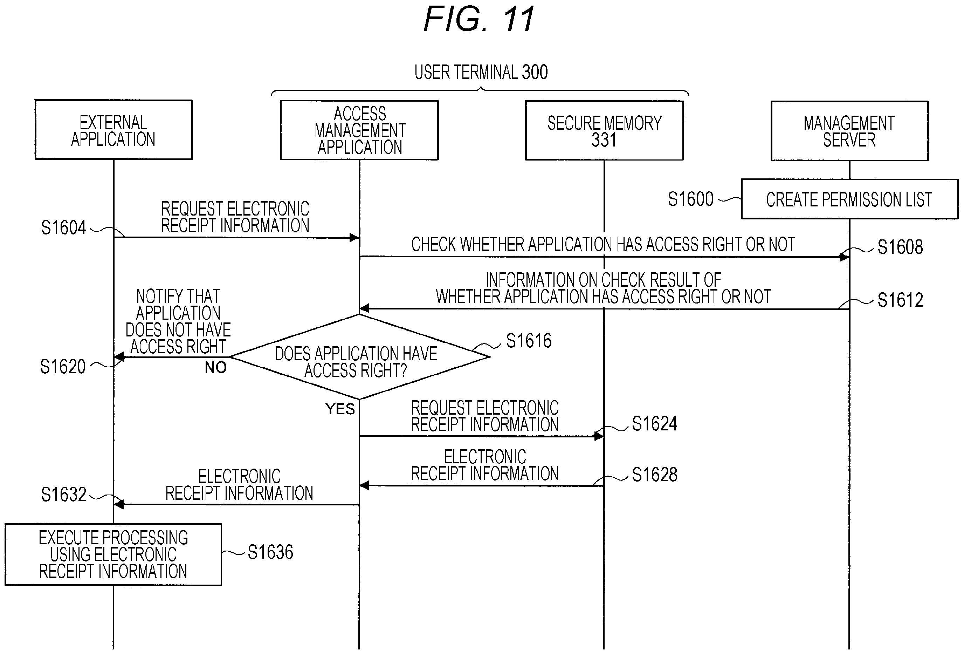

Furthermore, the processing unit 320 may function as a control unit that performs access control for the electronic receipt information stored in the secure memory 331 on the basis of a user operation. For example, the processing unit 320 may set an access right for a plurality of kinds of information units included in the electronic receipt information on the basis of a user operation. For example, in a case where the user terminal 300 is an apparatus such as the smartphone 301 equipped with an input unit (not shown), the processing unit 320 may set the access right on the basis of an input operation by a user. Note that the method of setting the access right is not limited to the above. Furthermore, the content of the access right is arbitrary. For example, the content of the access right includes content related to reading, adding, changing, and deleting, where security can be improved by disabling changing and deleting or the like. Moreover, the processing unit 320 may provide information on the access right to an external server (management server), and implement the access control for the electronic receipt information in coordination with the server. Details will be described later with reference to a flowchart of Fig. 11.

The processing unit 320 may also function as a setting unit that performs setting processing of the electronic receipt flag information on the basis of a user operation. Similar to the setting of the access right, the processing unit 320 may perform setting of the electronic receipt flag information on the basis of an input operation by a user. Note that the method of setting the electronic receipt flag information is not limited to the above. For example, the POS terminal 100 may include a function of the setting unit so that a store clerk may operate the POS terminal 100 to set the electronic receipt flag information when requested by a user. Furthermore, the smartphone 301 may include a function of the setting unit, so that a user may set the electronic receipt flag information of the IC card 302 using the smartphone 301 and allow the electronic receipt flag information to be reflected on the IC card 302 through communication between the smartphone 301 and the IC card 302.

### (Storage unit 330)

The storage unit 330 stores various information. For example, the storage unit 330 stores a program, a parameter, or the like used by each functional configuration of the user terminal 300. Note that the above content is merely an example, and the storage unit 330 may store other information. The storage unit 330 also includes the secure memory 331 as described above.

### (Secure memory 331)

The secure memory 331 is a memory that is configured in the security chip having tamper resistance and stores the electronic receipt information being received. The secure memory 331 is a memory area that can be accessed on the basis of a program executed by the processing unit 320, and is a data storage area that rejects external access and disables falsification of stored data based on external access. Note that although the secure memory 331 is used in the present embodiment, any memory other than the secure memory 331 may be used.

### <4. Operation of apparatus>

The functional configuration of each apparatus according to the present embodiment has been described above. Next, an operation of each apparatus according to the present embodiment will be described.

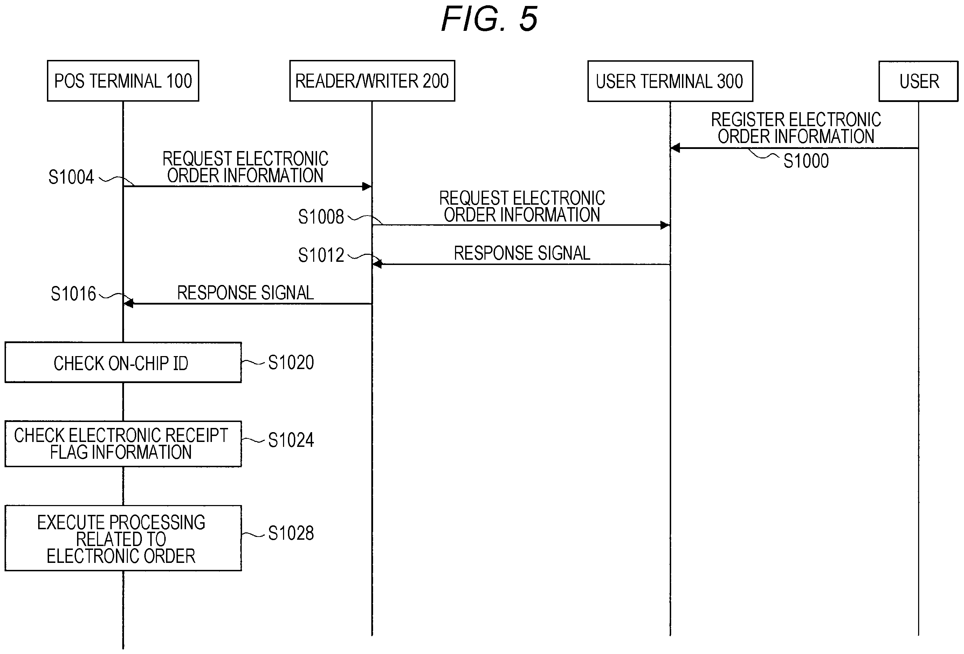

First, an operation in which the POS terminal 100 acquires the on-chip ID and the electronic receipt flag information of the user terminal 300 in the process of payment will be described with reference to Figs. 5 to 8. The POS terminal 100 acquires the on-chip ID and the electronic receipt flag information of the user terminal 300 at an arbitrary timing before issuing a receipt. The POS terminal 100 can thus provide electronic receipt information properly by comparing the on-chip ID with an on-chip ID used for reception of the electronic receipt information. The POS terminal 100 can also determine the necessity and destination of the issuance of the electronic receipt information on the basis of the electronic receipt flag information. Note that Figs. 5 to 8 are merely examples, and the POS terminal 100 may acquire the on-chip ID and the electronic receipt flag information of the user terminal 300 in another operation.

### (4-1. Operation in electronic order processing)

Fig. 5 is a flowchart illustrating an example of the operation in a case where the on-chip ID and the electronic receipt flag information are acquired when electronic order processing is performed. The electronic order processing refers to, for example, a user using the user terminal 300 to place an order for a product or service.

In step S1000, the user registers electronic order information using an application on the user terminal 300. In step S1004, the POS terminal 100 generates a signal for requesting the electronic order information and transmits the signal to the reader/writer 200, and in step S1008, the reader/writer 200 transmits the signal to the user terminal 300.

In step S1012, the user terminal 300 generates a response signal including the electronic order information on the basis of reception of the signal, and transmits the response signal to the reader/writer 200. At this time, the user terminal 300 also includes the on-chip ID and the electronic receipt flag information of the user terminal 300 in the response signal. In step S1016, the reader/writer 200 transmits the response signal to the POS terminal 100.

The POS terminal 100 having received the response signal checks the on-chip ID of the user terminal 300 included in the response signal in step S1020, and checks the electronic receipt flag information
included in the response signal in step S1024. In step S1028, the POS terminal 100 executes processing related to the electronic order. For example, the POS terminal 100 performs processing of providing the user with a product or the like ordered by the registration of the electronic order information or the like.

The above operation allows the POS terminal 100 to acquire the on-chip ID and the electronic receipt flag information of the user terminal 300 used in the processing for providing the electronic receipt information. Note that the flowchart of Fig. 5 is merely an example and can be changed as appropriate. For example, in a case where the POS terminal 100 can acquire the on-chip ID and the electronic receipt flag information in another operation performed before issuance of a receipt, these pieces of information need not be transmitted or received in the electronic order processing. In other words, an order may be placed verbally.

### (4-2. Operation in presenting membership card)

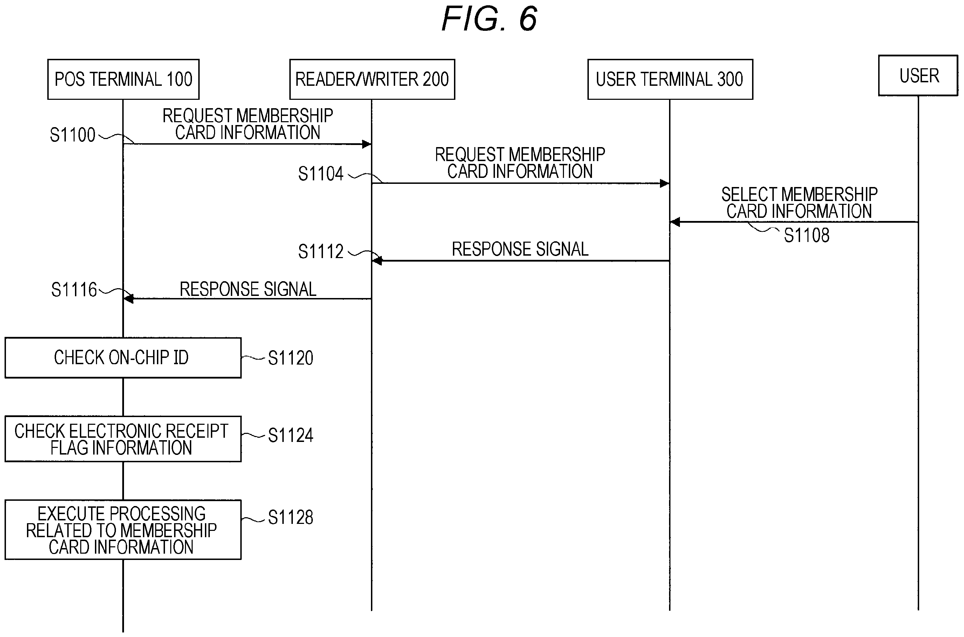

Fig. 6 is a flowchart illustrating an example of the operation in a case where the on-chip ID and the electronic receipt flag information are acquired when a membership card is presented. Note that although Fig. 6 assumes a case of using an information processing apparatus such as the smartphone 301 in which a plurality of kinds of membership card information is recorded, the present disclosure is not limited to this case. For example, the IC card 302 or the like in which one kind of the membership card information is recorded may be used.

In step S1100, the POS terminal 100 generates a signal for requesting the membership card information and transmits the signal to the reader/writer 200, and in step S1104, the reader/writer 200 transmits the signal to the user terminal 300. In step S1108, the user operates the information processing apparatus such as the smartphone 301 and selects the membership card information to be used from among the plurality of kinds of the membership card information. Note that the membership card information may be selected by the user telling a store clerk the membership card information to be used and the store clerk inputting the information to the POS terminal 100, or may be selected by the user inputting the membership card information to be used to the POS terminal 100 by himself. In this case, a part or all of the membership card information may be omitted from a response signal communicated in a subsequent operation.

In step S1112, the user terminal 300 generates the response signal including the membership card information on the basis of a user operation, and transmits the response signal to the reader/writer 200. At this time, the user terminal 300 also includes the on-chip ID and the electronic receipt flag information of the user terminal 300 in the response signal. In step S1116, the reader/writer 200 transmits the response signal to the POS terminal 100.

The POS terminal 100 having received the response signal checks the on-chip ID of the user terminal 300 included in the response signal in step S1120, and checks the electronic receipt flag information
included in the response signal in step S1124. In step S1128, the POS terminal 100 executes processing related to the membership card information included in the response signal. For example, the POS terminal 100 makes a determination or the like on whether the user is registered as a member or not on the basis of the membership card information.

The above operation allows the POS terminal 100 to acquire the on-chip ID and the electronic receipt flag information of the user terminal 300 used in the processing for providing the electronic receipt information. Note that the flowchart of Fig. 6 is merely an example and can be changed as appropriate. For example, in a case where the POS terminal 100 can acquire the on-chip ID and the electronic receipt flag information in another operation performed before issuance of a receipt, these pieces of information need not be transmitted or received in presenting the membership card.

### (4-3. Operation in presenting loyalty card)

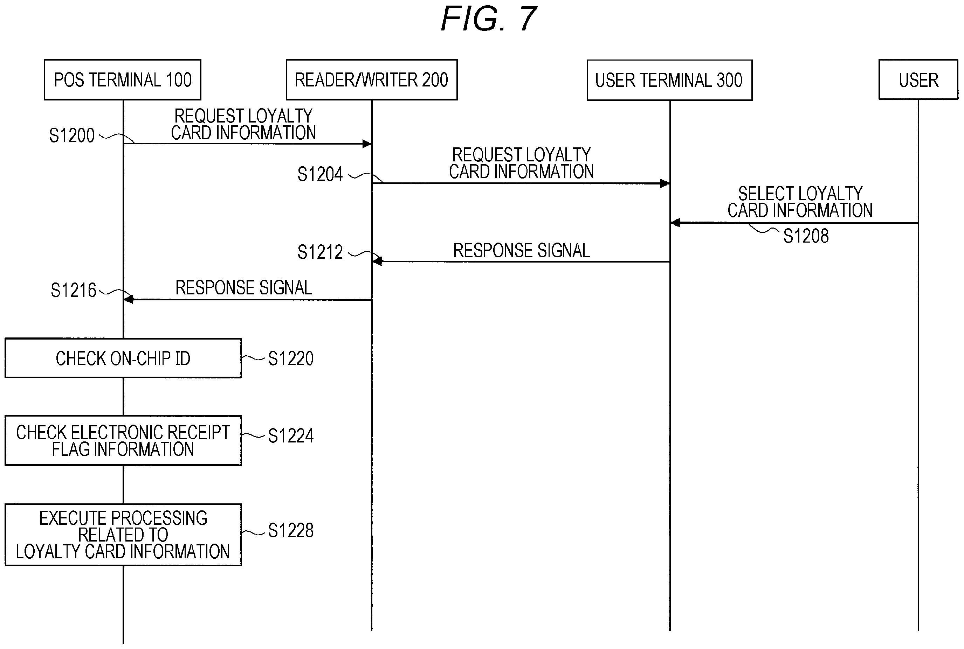

Fig. 7 is a flowchart illustrating an example of the operation in a case where the on-chip ID and the electronic receipt flag information are acquired when a loyalty card is presented. Note that although Fig. 7 assumes a case of using an information processing apparatus such as the smartphone 301 in which a plurality of kinds of loyalty card information is recorded, the present disclosure is not limited to this case. For example, the IC card 302 or the like in which one kind of the loyalty card information is recorded may be used.

In step S1200, the POS terminal 100 generates a signal for requesting the loyalty card information and transmits the signal to the reader/writer 200, and in step S1204, the reader/writer 200 transmits the signal to the user terminal 300. In step S1208, the user operates the information processing apparatus such as the smartphone 301 and selects the loyalty card information to be used from among the plurality of kinds of the loyalty card information. Note that the loyalty card information may be selected by the user telling a store clerk the loyalty card information to be used and the store clerk inputting the information to the POS terminal 100, or may be selected by the user inputting the loyalty card information to be used to the POS terminal 100 by himself. In this case, a part or all of the loyalty card information may be omitted from a response signal communicated in a subsequent operation.

In step S1212, the user terminal 300 generates the response signal including the loyalty card information on the basis of a user operation, and transmits the response signal to the reader/writer 200. At this time, the user terminal 300 also includes the on-chip ID and the electronic receipt flag information of the user terminal 300 in the response signal. In step S1216, the reader/writer 200 transmits the response signal to the POS terminal 100.

The POS terminal 100 having received the response signal checks the on-chip ID of the user terminal 300 included in the response signal in step S1220, and checks the electronic receipt flag information
included in the response signal in step S1224. In step S1228, the POS terminal 100 executes processing related to the loyalty card information included in the response signal. For example, the POS terminal 100 performs processing of adding points corresponding to the amount of payment or the like.

The above operation allows the POS terminal 100 to acquire the on-chip ID and the electronic receipt flag information of the user terminal 300 used in the processing for providing the electronic receipt information. Note that the flowchart of Fig. 7 is merely an example and can be changed as appropriate. For example, in a case where the POS terminal 100 can acquire the on-chip ID and the electronic receipt flag information in another operation performed before issuance of a receipt, these pieces of information need not be transmitted or received in presenting the loyalty card.

### (4-4. Operation of payment)

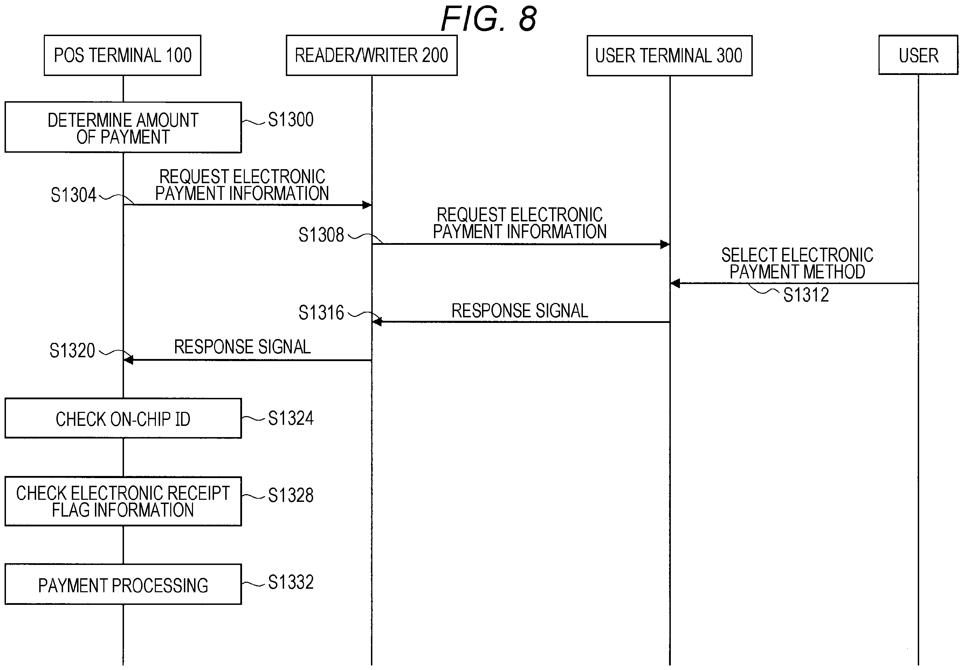

Fig. 8 is a flowchart illustrating an example of the operation in a case where the on-chip ID and the electronic receipt flag information are acquired when a payment is made. Note that although Fig. 8 assumes a case of using an information processing apparatus such as the smartphone 301 that can implement a plurality of kinds of payment methods, the present disclosure is not limited to this case. For example, the IC card 302 or the like (a prepaid card, a credit card, or the like) that can implement only one kind of payment method may be used.

In step S1300, the POS terminal 100 determines the amount of payment on the basis of electronic order information. In step S1304, the POS terminal 100 generates a signal for requesting information used in the payment (the balance of electronic money, a credit card number, or the like. The information will be hereinafter referred to as "electronic payment information") and transmits the signal to the reader/writer 200, and in step S1308, the reader/writer 200 transmits the signal to the user terminal 300. In step S1312, the user operates the information processing apparatus such as the smartphone 301 and selects the payment method from among the plurality of kinds of the payment methods. Note that the payment method may be selected by the user telling a store clerk the payment method and the store clerk inputting the information to the POS terminal 100, or may be selected by the user inputting the payment method to the POS terminal 100 by himself. In this case, a part or all of the electronic payment information may be omitted from a response signal communicated in a subsequent operation.

In step S1316, the user terminal 300 generates the response signal including the electronic payment information on the basis of a user operation, and transmits the response signal to the reader/writer 200. At this time, the user terminal 300 also includes the on-chip ID and the electronic receipt flag information of the user terminal 300 in the response signal. In step S1320, the reader/writer 200 transmits the response signal to the POS terminal 100.

The POS terminal 100 having received the response signal checks the on-chip ID of the user terminal 300 included in the response signal in step S1324, and checks the electronic receipt flag information
included in the response signal in step S1328. In step S1332, the POS terminal 100 executes payment processing. For example, the POS terminal 100 performs processing for acquiring electronic money corresponding to the amount of payment from the electronic money held in the user terminal 300, or performs general credit card payment processing on the basis of credit card information acquired from the user terminal 300.

The above operation allows the POS terminal 100 to acquire the on-chip ID and the electronic receipt flag information of the user terminal 300 used in the processing for providing the electronic receipt information. Note that the flowchart of Fig. 8 is merely an example and can be changed as appropriate. For example, in a case where the POS terminal 100 can acquire the on-chip ID and the electronic receipt flag information in another operation performed before issuance of a receipt, these pieces of information need not be transmitted or received at the time of the payment processing. In other words, the payment may be made by cash.

### (4-5. First receipt issuing operation)

The various operations performed before issuance of a receipt have been described above. Next, there will be described an operation of issuing a receipt that is performed on the basis of the on-chip ID and the electronic receipt flag information of the user terminal 300 acquired by the POS terminal 100 in the various operations described above.

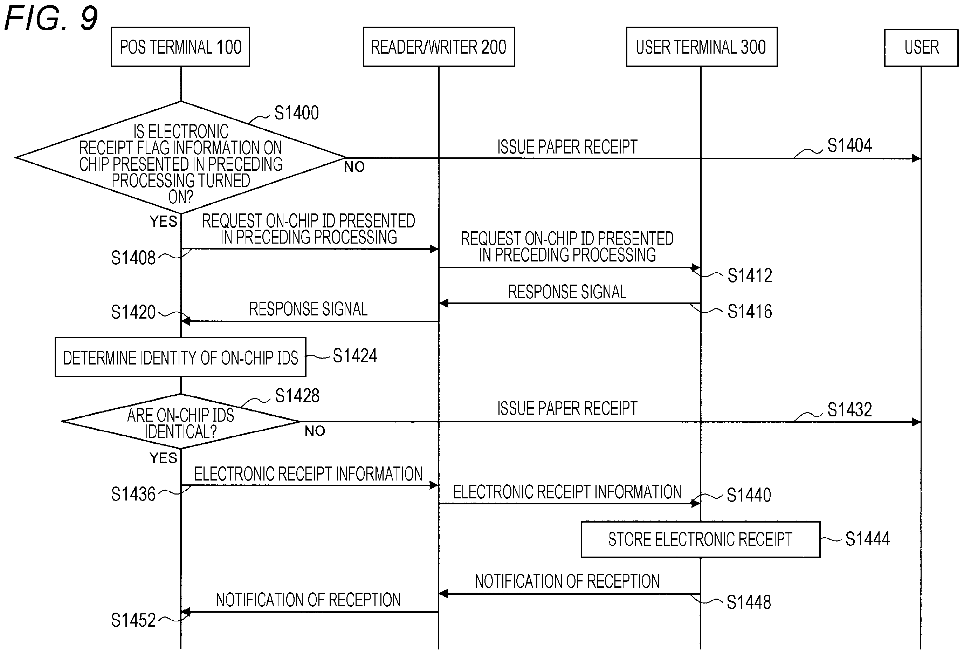

Fig. 9 is a flowchart illustrating an example of a first receipt issuing operation. The first receipt issuing operation is an operation of issuing electronic receipt information in a case where the electronic receipt flag information on the chip presented in the processing immediately before issuance of the receipt is turned on (referring to a case where issuance of the electronic receipt information is required). For example, the operation corresponds to a case where the electronic receipt flag information on the chip presented in the payment processing executed immediately before issuance of the receipt is turned on, and the electronic receipt information is provided to the apparatus (such as the smartphone 301) used for the payment processing and the like.

In a case where the electronic receipt flag information on the chip presented in the processing immediately before issuance of the receipt is not turned on in step S1400 (No in step S1400), the POS terminal 100 issues a paper receipt instead of electronic receipt information to the user in step S1404 (or issues neither the electronic receipt information nor the paper receipt).

In a case where the electronic receipt flag information on the chip presented in the processing immediately before issuance of the receipt is turned on (Yes in step S1400), the POS terminal 100 generates a signal for requesting the on-chip ID of the chip and transmits the signal to the reader/writer 200 in step S1408, and the reader/writer 200 transmits the signal to the user terminal 300 in step S1412.

In step S1416, the user terminal 300 generates a response signal including the on-chip ID on the basis of reception of the signal, and transmits the response signal to the reader/writer 200. In step S1420, the reader/writer 200 transmits the response signal to the POS terminal 100.

In step S1424, the POS terminal 100 determines the identity between the on-chip ID included in the response signal and the on-chip ID acquired in the processing immediately before issuance of the receipt. In a case where it is not determined that the on-chip IDs are identical to each other (No in step S1428), the POS terminal 100 issues a paper receipt instead of electronic receipt information to the user in step S1432 (or issues neither the electronic receipt information nor the paper receipt).

In a case where it is determined that the on-chip IDs are identical to each other (Yes in step S1428), the POS terminal 100 generates electronic receipt information and transmits a signal including the electronic receipt information to the reader/writer 200 in step S1436. In step S1440, the reader/writer 200 transmits the signal to the user terminal 300, whereby the user terminal 300 can acquire the electronic receipt information. In step S1444, the electronic receipt information acquired by the user terminal 300 is stored in the secure memory 331.

In step S1448, the user terminal 300 generates a notification of reception of the electronic receipt information and transmits the signal to the reader/writer 200. In step S1452, the reader/writer 200 transmits the notification of reception to the POS terminal 100 so that the POS terminal 100 can acknowledge the reception of the electronic receipt information by the user terminal 300. Note that in a case where the user terminal 300 has failed to receive the electronic receipt information properly, the POS terminal 100 may perform the transmission processing of the electronic receipt information again.

As described above, the POS terminal 100 does not provide the electronic receipt information to a chip that does not have the same on-chip ID as the on-chip ID acquired in the processing immediately before issuance of the receipt. The POS terminal 100 can thus guarantee the identity between the payer and the recipient of the electronic receipt information. For example, even if a third party attempts to acquire the electronic receipt information by holding an arbitrary information processing apparatus over the reader/writer 200 after payment, the POS terminal 100 can avoid provision of the electronic receipt information to the apparatus since the on-chip ID at the time of payment is different from the on-chip ID of the apparatus. Note that the flowchart of Fig. 9 is merely an example and can be changed as appropriate.

### (4-6. Second receipt issuing operation)

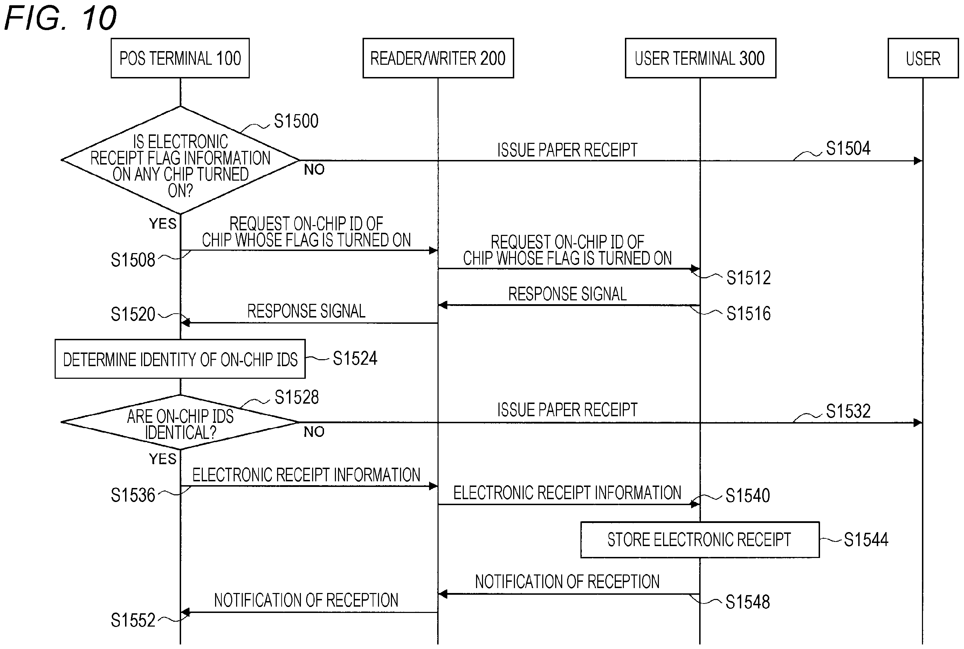

Fig. 10 is a flowchart illustrating an example of a second receipt issuing operation. The second receipt issuing operation is an operation of issuing electronic receipt information in a case where the electronic receipt flag information on any one chip presented in the process of payment is turned on. For example, the operation corresponds to a case where the user acquires the electronic receipt information by holding the user terminal 300 whose electronic receipt flag information is turned on over the reader/writer 200 again and the like after the payment processing. Note that in a case where the electronic receipt information on a plurality of chips is turned on, any one of the chips may be held over the reader/writer 200 again.

In a case where the electronic receipt flag information on any one chip presented in the process of payment is not turned on in step S1500 (No in step S1500), the POS terminal 100 issues a paper receipt instead of electronic receipt information to the user in step S1504 (or issues neither the electronic receipt information nor the paper receipt).

In a case where the electronic receipt flag information on any one chip is turned on (Yes in step S1500), the POS terminal 100 generates a signal for requesting the on-chip ID of the chip and transmits the signal to the reader/writer 200 in step S1508, and the reader/writer 200 transmits the signal to the user terminal 300 in step S1512.

Then in step S1516, the user holds the user terminal 300 whose electronic receipt flag information is turned on over the reader/writer 200 again, whereby the user terminal 300 generates a response signal including the on-chip ID and transmits the response signal to the reader/writer 200. In step S1520, the reader/writer 200 transmits the response signal to the POS terminal 100. The subsequent processings are the same as steps S1424 to S1452 in Fig. 9 and thus will not be described.

The above operation allows the user to collect the electronic receipt information on a desired chip. Furthermore, the user intentionally performs the action of holding the user terminal 300 over the reader/writer 200 again with the acquisition of the electronic receipt information, so that it is possible to avoid a situation where the user unintentionally acquires the electronic receipt information. Note that the flowchart of Fig. 10 is merely an example and can be changed as appropriate. For example, the electronic receipt information need not be issued in a case where the electronic receipt flag information on any one chip presented in the process of payment is turned off. Furthermore, the priority of the electronic receipt flag information on the chips may be determined on the basis of the order in which the chips are presented and the like (for example, the electronic receipt flag information on the chip to be presented later may be given higher priority and the like), or information regarding the priority may be presented separately.

### (4-7. Access control operation for electronic receipt information)

Next, referring to Fig. 11, there will be described a control operation for access to electronic receipt information from an application of a third party (hereinafter referred to as an "external application" for convenience) other than a user who has acquired the electronic receipt information. Fig. 11 is a flowchart illustrating an example of the control operation for access to the electronic receipt information from an external application.

An "access management application" illustrated in Fig. 11 is an application that is implemented by the processing unit 320 of the user terminal 300 and controls access to the electronic receipt information. Furthermore, a "management server" is an information processing apparatus that manages the access right to the electronic receipt information. Although the following description assumes a case where the management server is provided separately from the user terminal 300, the present disclosure is not limited to this case. In other words, the user terminal 300 may have a function of the management server.

First, in step S1600, the management server creates in advance a permission list including information associated with the access right to the electronic receipt information. The permission list is, for example, information in which accessible information items are listed for each external application, and information which can be edited by the user as appropriate. Note that this is merely an example, and the content of the permission list can be changed as appropriate.

In a case where the external application transmits a signal for requesting access to the electronic receipt information (an information item to be accessed may be specified) to the user terminal 300 in step S1604, in step S1608, the access management application transmits to the management server a signal for checking whether the external application has the access right or not and the content thereof. In step S1612, the management server checks whether the external application has the access right or not and the content thereof on the basis of the reception of the signal, and transmits a check result to the access management application.

In a case where the external application does not have the access right to the electronic receipt information (No in step S1616), in step S1620, the access management application notifies the external application that it does not have the access right. In a case where the external application has the access right to the electronic receipt information (Yes in step S1616), in step S1624, the access management application transmits a signal for requesting the electronic receipt information to the secure memory 331. In step S1628, the secure memory 331 provides the electronic receipt information to the access management application.

In step S1632, the access management application provides the electronic receipt information to the external application. In step S1636, the external application executes various processings using the electronic receipt information received.

The above operation allows the user terminal 300 to more properly control access to the stored electronic receipt information. For example, if key information or the like enabling access to the secure memory 331 is given to the external application, there is a possibility that unauthorized access or the like by a third party occurs if the key information leaks. In the above method, on the other hand, the management server centrally manages the access right to the electronic receipt information so that the unauthorized access as described above does not occur.

### <5. Hardware configuration of apparatus>

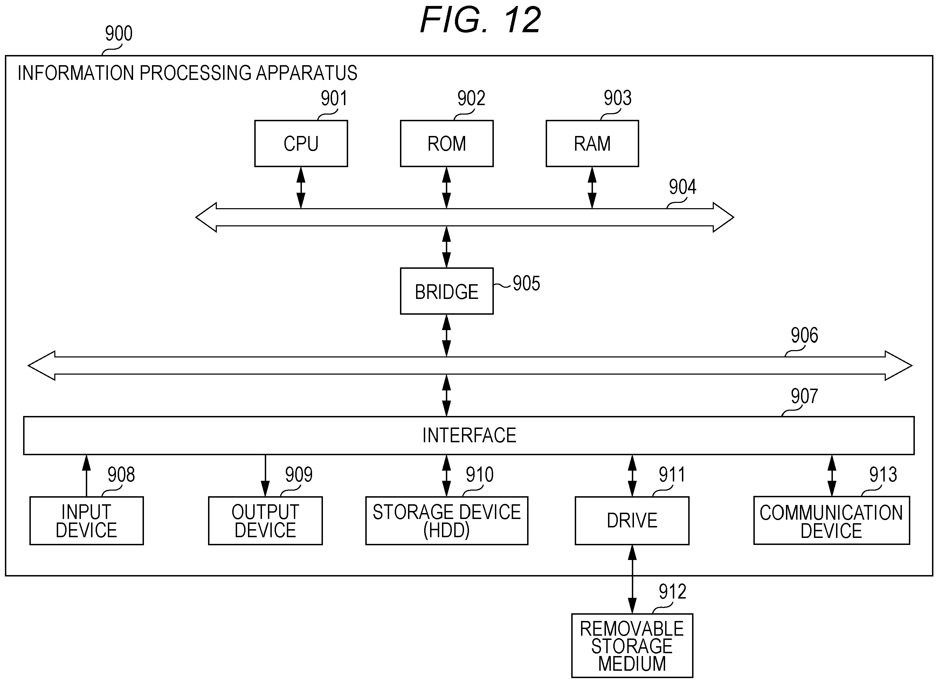

The operation of each apparatus according to the present embodiment has been described above. Next, a hardware configuration of the POS terminal 100 or the user terminal 300 will be described with reference to Fig. 12. Fig. 12 is a block diagram illustrating an example of the hardware configuration of the POS terminal 100 or the user terminal 300. The POS terminal 100 or the user terminal 300 is implemented by an information processing apparatus 900 illustrated in Fig. 12.

The information processing apparatus 900 includes a central processing unit (CPU) 901, a ROM 902, a random access memory (RAM) 903, and a host bus 904. The information processing apparatus 900 further includes a bridge 905, an external bus 906, an interface 907, an input device 908, an output device 909, a storage device 910, a drive 911, a removable storage medium 912, and a communication device 913.

The CPU 901 functions as an arithmetic processing unit and a control device, and controls the overall operation in the information processing apparatus 900 according to various programs. The CPU 901 may also be a microprocessor. The ROM 902 stores programs or operation parameters and the like used by the CPU 901. The RAM 903 temporarily stores programs used in the execution of the CPU 901 or parameters and the like changing as appropriate in the execution. These are mutually connected by the host bus 904 including a CPU bus or the like.

The host bus 904 is connected to the external bus 906 such as a peripheral component interconnect/interface (PCI) bus via the bridge 905. Note that the host bus 904, the bridge 905, and the external bus 906 do not necessarily have to be configured separately, but these functions may be implemented on one bus.

The input device 908 includes input means such as a mouse, a keyboard, a touch panel, a button, a microphone, a switch, and a lever operated by a user to input information, an input control circuit that generates an input signal on the basis of an input by the user and outputs the signal to the CPU 901, and the like. The user who operates the information processing apparatus 900 can input various data or instruct a processing operation to the information processing apparatus 900 by operating the input device 908.

The output device 909 includes, for example, a display device such as a cathode ray tube (CRT) display device, a liquid crystal display (LCD) device, an organic light emitting diode (OLED) device, and a lamp.

The storage device 910 is a device for data storage configured as an example of a storage unit of the short-range wireless communication device according to an embodiment of the present disclosure. The storage device 910 may include a storage medium, a recording device that records data in the storage medium, a reading device that reads data from the storage medium, a deletion device that deletes data recorded in the storage medium, and the like. The storage device 910 includes a hard disk drive (HDD), for example. The storage device 910 drives a hard disk and stores programs executed by the CPU 901 and various data.

The drive 911 is a reader/writer for a storage medium, and is built in or externally attached to the information processing apparatus 900. The drive 911 reads information recorded in the removable storage medium 912 placed therein such as a magnetic disk, an optical disk, a magneto-optical disk, or a semiconductor memory, and outputs the information to the RAM 903. The drive 911 can also write information to the removable storage medium 912.

The communication device 913 is a communication interface including a communication device or the like.

### <6. Conclusion>

The present disclosure described above can more properly provide the electronic receipt information. More specifically, the present disclosure can provide the electronic receipt information without going through a server. The present disclosure can thus reduce the cost for the server or the like and cut the time lag between completion of a payment and reception of the electronic receipt information by a user. Moreover, the present disclosure can provide the electronic receipt information without the user registering as a member.

Furthermore, the present disclosure compares the on-chip ID acquired in the process of payment with the on-chip ID acquired at the time of provision of the electronic receipt information and provides the electronic receipt information in a case where these are identical, thereby being able to guarantee the identity between the payer and the recipient of the electronic receipt information.

Furthermore, the present disclosure can more reliably guarantee the identity between the payer and the recipient of the electronic receipt information by using the contactless communication (NFC, Bluetooth, Wi-Fi, or the like) that is successful in a case where the ones performing communication are separated by a predetermined distance or less, or using the contact communication for the delivery of the electronic receipt information.

Furthermore, the present disclosure can realize a series of processings (electronic order processing, presentation of a membership card, presentation of a loyalty card and addition of points, payment processing, reception of electronic receipt information, and the like) that occurs with payment just by the action of the user holding the user terminal 300 over the reader/writer 200 once. The present disclosure can also provide a receipt more easily and by a method desired by the user with the use of the electronic receipt flag information.

Furthermore, by storing the electronic receipt information in the secure memory 331, the present disclosure can prevent unauthorized viewing, falsification, duplication, deletion, or the like of the electronic receipt information. The present disclosure can also perform access control for the plurality of kinds of information units included in the electronic receipt information. Furthermore, the secure memory 331 can be used in common by a plurality of applications or services so that the present disclosure can facilitate secondary use of the electronic receipt information.

The preferred embodiment of the present disclosure has been described in detail with reference to the drawings, but the technical scope of the present disclosure is not limited to such examples. Various modifications or alterations will become apparent to those skilled in the art of the present disclosure without departing from the scope of the technical ideas described in the claims, and it is to be understood that these naturally belong to the technical scope of the present disclosure.

Furthermore, the effects described in the present specification are merely illustrative or exemplary, and not restrictive. In other words, the technology according to the present disclosure can exhibit other effects apparent to those skilled in the art from the description of the present specification in addition to or instead of the effects described above.

Note that the following configurations are also within the technical scope of the present disclosure.
(1) An information processing apparatus including:
   an acquisition unit that acquires predetermined information provided from an external terminal used in a process of payment; and
   a control unit that controls provision of electronic receipt information of the payment on the basis of the predetermined information.
(2) The information processing apparatus according to (1), in which
   the predetermined information is predetermined identification information that is recorded in a chip included in the external terminal.
(3) The information processing apparatus according to (2), in which
   the control unit provides the electronic receipt information to an external terminal with the predetermined identification information matching the identification information provided in the process of the payment.
(4) The information processing apparatus according to (2) or (3), in which
   the predetermined information also includes flag information indicating necessity of the electronic receipt information.
(5) The information processing apparatus according to (4), in which
   the control unit controls provision of the electronic receipt information on the basis of the flag information acquired immediately before provision of the electronic receipt information.
(6) The information processing apparatus according to (4), in which
   the control unit provides the electronic receipt information on the basis of any of a plurality of pieces of the flag information acquired in the process of the payment.
(7) An information processing method executed by a computer, the method including:
   acquiring predetermined information provided from an external terminal used in a process of payment; and
   controlling provision of electronic receipt information of the payment on the basis of the predetermined information.
(8) An information processing apparatus including
   a communication unit that performs transmission of flag information indicating necessity of electronic receipt information of payment in a process of the payment.
(9) The information processing apparatus according to (8), in which
   the communication unit also transmits predetermined identification information that is recorded in a chip included in its own apparatus.
(10) The information processing apparatus according to (8) or (9), in which
   the communication unit performs the transmission by a communication scheme that is successful in a case where a separation from an apparatus with which the communication is established is less than or equal to a predetermined distance.
(11) The information processing apparatus according to (10), in which
   the communication unit performs the transmission by the communication scheme being any of Near Field Communication (NFC), Wireless Fidelity (Wi-Fi), or Bluetooth (registered trademark).
(12) The information processing apparatus according to any one of (8) to (11), further including
   a storage unit that stores the electronic receipt information in a secure memory included in a security chip having tamper resistance.
(13) The information processing apparatus according to (12), in which
   the secure memory is used in common by a plurality of applications.
(14) The information processing apparatus according to (12) or (13), further including
   a control unit that controls access to the electronic receipt information in coordination with an external server managing an access right to the electronic receipt information.
(15) The information processing apparatus according to (14), in which
   the access right is set for a plurality of kinds of information units included in the electronic receipt information.
(16) The information processing apparatus according to any one of (8) to (15), further including
   a setting unit that sets the flag information on the basis of a user operation.
(17) The information processing apparatus according to any one of (8) to (16), in which
   the information processing apparatus includes an IC card, a smartphone, or a mobile phone.
(18) An information processing method executed by a computer, the method including
   transmitting flag information indicating necessity of electronic receipt information of payment in a process of the payment.

### REFERENCE SIGNS LIST

- 100: POS terminal
- 110: Communication unit
- 120: Processing unit
- 121: Order processing unit
- 122: Membership card processing unit
- 123: Loyalty card processing unit
- 124: Payment processing unit
- 125: Receipt processing unit
- 130: Storage unit
- 200: Reader/writer
- 210: Communication unit
- 211: First communication unit
- 212: Second communication unit
- 220: Processing unit
- 230: Storage unit
- 300: User terminal
- 310: Communication unit
- 320: Processing unit
- 330: Storage unit
- 331: Secure memory

## Claims

1. An information processing apparatus comprising:
an acquisition unit that acquires predetermined information provided from an external terminal used in a process of payment; and
a control unit that controls provision of electronic receipt information of the payment on a basis of the predetermined information.

2. The information processing apparatus according to claim 1, wherein
the predetermined information is predetermined identification information that is recorded in a chip included in the external terminal.

3. The information processing apparatus according to claim 2, wherein
the control unit provides the electronic receipt information to an external terminal with the predetermined identification information matching the identification information provided in the process of the payment.

4. The information processing apparatus according to claim 2, wherein
the predetermined information also includes flag information indicating necessity of the electronic receipt information.

5. The information processing apparatus according to claim 4, wherein
the control unit controls provision of the electronic receipt information on a basis of the flag information acquired immediately before provision of the electronic receipt information.

6. The information processing apparatus according to claim 4, wherein
the control unit provides the electronic receipt information on a basis of any of a plurality of pieces of the flag information acquired in the process of the payment.

7. An information processing method executed by a computer, the method comprising:
acquiring predetermined information provided from an external terminal used in a process of payment; and
controlling provision of electronic receipt information of the payment on a basis of the predetermined information.

8. An information processing apparatus comprising
a communication unit that performs transmission of flag information indicating necessity of electronic receipt information of payment in a process of the payment.

9. The information processing apparatus according to claim 8, wherein
the communication unit also transmits predetermined identification information that is recorded in a chip included in its own apparatus.

10. The information processing apparatus according to claim 8, wherein
the communication unit performs the transmission by a communication scheme that is successful in a case where a separation from an apparatus with which the communication is established is less than or equal to a predetermined distance.

11. The information processing apparatus according to claim 10, wherein
the communication unit performs the transmission by the communication scheme being any of Near Field Communication (NFC), Wireless Fidelity (Wi-Fi), or Bluetooth (registered trademark).

12. The information processing apparatus according to claim 8, further comprising
a storage unit that stores the electronic receipt information in a secure memory included in a security chip having tamper resistance.

13. The information processing apparatus according to claim 12, wherein
the secure memory is used in common by a plurality of applications.

14. The information processing apparatus according to claim 12, further comprising
a control unit that controls access to the electronic receipt information in coordination with an external server managing an access right to the electronic receipt information.

15. The information processing apparatus according to claim 14, wherein
the access right is set for a plurality of kinds of information units included in the electronic receipt information.

16. The information processing apparatus according to claim 8, further comprising
a setting unit that sets the flag information on a basis of a user operation.

17. The information processing apparatus according to claim 8, wherein
the information processing apparatus includes an IC card, a smartphone, or a mobile phone.

18. An information processing method executed by a computer, the method comprising
transmitting flag information indicating necessity of electronic receipt information of payment in a process of the payment.
